# EUROPÄISCHE PATENTSCHRIFT

(11) **EP 1 748 921 B1**
(45) Veröffentlichungstag und Bekanntmachung des Hinweises auf die Patenterteilung: **10.10.2007**
(21) Anmeldenummer: 05745104.9
(22) Anmeldetag: 27.04.2005
(51) Int. Cl.: B62J 9/00, B62J 7/04

(54) **MOTORRAD MIT EINER HALTEEINRICHTUNG FÜR EINEN SEITENKOFFER**
MOTORCYCLE COMPRISING A HOLDING DEVICE FOR A LATERAL CASE
MOTOCYCLETTE COMPRENANT UN DISPOSITIF DE FIXATION POUR SACOCHE LATERALE

(30) Priorität: 26.05.2004 DE 102004025748
(43) Veröffentlichungstag der Anmeldung: 07.02.2007
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2005/004474
(87) Internationale Veröffentlichungsnummer: WO 2005/118382

(56) Entgegenhaltungen:
- EP-A- 1 369 344
- DE-A1- 3 008 984
- DE-A1- 3 226 445
- DE-A1- 3 612 311
- DE-A1- 3 716 445
- DE-A1- 4 029 712
- DE-A1- 10 121 589
- DE-A1- 10 150 055
- DE-A1- 19 827 973
- DE-C1- 4 302 949
- DE-U1- 8 315 720
- FR-A- 2 562 861
- GB-A- 2 047 644
- US-A- 2 783 927
- US-A- 4 260 084
- US-A- 5 025 883

## Beschreibung

Die vorliegende Erfindung betrifft ein Motorrad mit einem Seitenkoffer gemäß dem Oberbegriff des Patentanspruches 1.

Ein derartiges Motorrad ist aus der DE 101 21 589 A1 bekannt.

Viele Motorräder sind im Heckbereich mit Seitenkoffern ausgestattet. Zur Befestigung der Seitenkoffer am Motorrad sind unterschiedlichste Varianten bekannt.

Aufgabe der vorliegenden Erfindung ist es, ein Motorrad mit einer Halteeinrichtung zur Befestigung eines Seitenkoffers zu schaffen, wobei die Halteeinrichtung kompakt aufgebaut, ergonomisch günstig angeordnet ist, sich gut in das Design des Motorrads einfügen läßt und bei abgenommenem Seitenkoffer zum Verzurren von Gepäck nutzbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Halteeinrichtung, die im Heckbereich des Motorrads angeordnet ist und die zum Halten eines seitlich am Motorrad angeordneten Seitenkoffers vorgesehen ist, wobei die Halteeinrichtung mindestens ein zahnartig bzw. zapfenartig ausgebildetes Formschlusselement aufweist, das nach oben vom Motorrad absteht und das ein Loch aufweist. Der Seitenkoffer weist eine Ausnehmung auf, die komplementär in Bezug auf das zahn- bzw. zapfenartige Formschlusselement ausgebildet ist. Zur Befestigung des Seitenkoffers braucht dieser mit seiner Ausnehmung lediglich auf das Formschlusselement aufgesetzt werden. Der Seitenkoffer wird also mit seiner Ausnehmung in das Formschlusselement eingehängt und dadurch automatisch richtig positioniert. Wie bereits erwähnt weist das zahn- bzw. zapfenartige Formschlusselement ein Loch auf. Bei abgenommenem Seitenkoffer fungiert das Loch des Formschlusselements als Verzurröse. In die Verzurröse kann ein Spannband, ein Seil oder ein Expander eingefädelt bzw. eingehängt werden, was eine sichere Verzurrung von Gepäck ermöglicht.

Das mindestens eine zahn- bzw. zapfenartige Formschlusselement kann, in einer Vorder- bzw. Rückansicht des Motorrads gesehen, schräg nach oben vom Motorrad abstehend angeordnet sein. In Bezug auf eine Hochachse des Motorrads kann das Formschlusselement in einem Winkel, der in einem Bereich zwischen 20° und 45° liegt, schräg angeordnet sein. Vorzugsweise schließt das Formschlusselement mit einer Hochachse des Motorrads einen Winkel von 30° ein. Aufgrund der schrägen Anordnung des Formschlusselements wird das Einhängen des Seitenkoffers erheblich erleichtert. Der Seitenkoffer muss beim Einhängen nämlich nicht senkrecht von oben nach unten angesenkt werden, sondern kann schräg von oben her nach unten an das Formschlusselement herangeführt werden. Ein weiterer wesentlicher Vorteil der schrägen Anordnung besteht darin, dass oberhalb des mindestens einen Formschlusselements ein Haltegriff für den Sozius angeordnet sein kann, der sich z.B. in Längsrichtung des Motorrads erstreckt. Da der Seitenkoffer beim Montieren bzw. Abnehmen nicht in vertikaler Richtung, sondern schräg bewegt wird, ist eine problemlose Montage bzw. Demontage möglich, selbst wenn der Haltegriff unmittelbar oberhalb des mindestens einen Formschlusselements angebracht ist.

Vorzugsweise weist die Halteeinrichtung zwei solcher zahn- bzw. zapfenartiger Formschlusselemente auf, die über einen Verbindungsabschnitt einstückig miteinander verbunden sein können. Die durch die beiden Formschlusselemente und den Verbindungsabschnitt gebildete Halteeinrichtung kann ein Kunststoffteil sein, das im Spritzgussverfahren hergestellt ist. Die Halteeinrichtung kann mittels Schrauben oder anderen Befestigungselementen am Motorradrahmen befestigt sein.

Nach einer Weiterbildung der Erfindung kann das Halteelement zumindest teilweise durch eine Verkleidung des Motorrads verdeckt sein. Dies ermöglicht ein sehr ansprechendes Design. Bei einer Variante der Erfindung kann vorgesehen sein, dass die Halteeinrichtung unterhalb der Verkleidung angeordnet ist und lediglich das Formschlusselement bzw. die Formschlusselemente aus der Verkleidung herausstehen, wobei die Verkleidung im Bereich der Formschlusselemente entsprechende Ausnehmungen aufweist. Alternativ dazu kann vorgesehen sein, dass die Halteeinrichtung nicht nur mit ihren Formschlusselementen aus der Verkleidung hervorsteht, sondern dass auch ein Teilabschnitt des Verbindungsabschnitts ein ansprechendes Design aufweist und nicht durch die Verkleidung abgedeckt ist.

Das mindestens eine Formschlusselement kann plattenförmig mit zwei im wesentlichen parallelen Seitenflächen ausgebildet sein. Um das Einhängen des Seitenkoffers zu erleichtern kann vorgesehen sein, dass sich das mindestens eine Formschlusselement in Richtung zu seinem freien, vom Motorrad abstehenden Ende hin verjüngt. Diesbezüglich sind vielfältige Gestaltungsmöglichkeiten denkbar. In einer Seitenansicht kann das Formschlusselement prismenförmig bzw. dreieckförmig gestaltet sein oder eine gerundete Seitenkontur aufweisen, ähnlich der Form eines Zahnradzahns.

Im Folgenden wir die Erfindung im Zusammenhang mit der Zeichnung näher erläutert. Es zeigen:
- Figur 1: eine perspektivische Darstellung einer Halteeinrichtung für einen Motorradseitenkoffer gemäß der Erfindung;
- Figur 2: einen Querschnitt durch die Halteeinrichtung entlang der Schnittlinie A-A, wobei das Formschlusselement als Verzurröse genutzt wird; und
- Figur 3: einen Querschnitt durch die Halteeinrichtung entlang der Schnittlinie B-B, wobei in das Formschlusselement ein Seitenkoffer eingehängt ist.

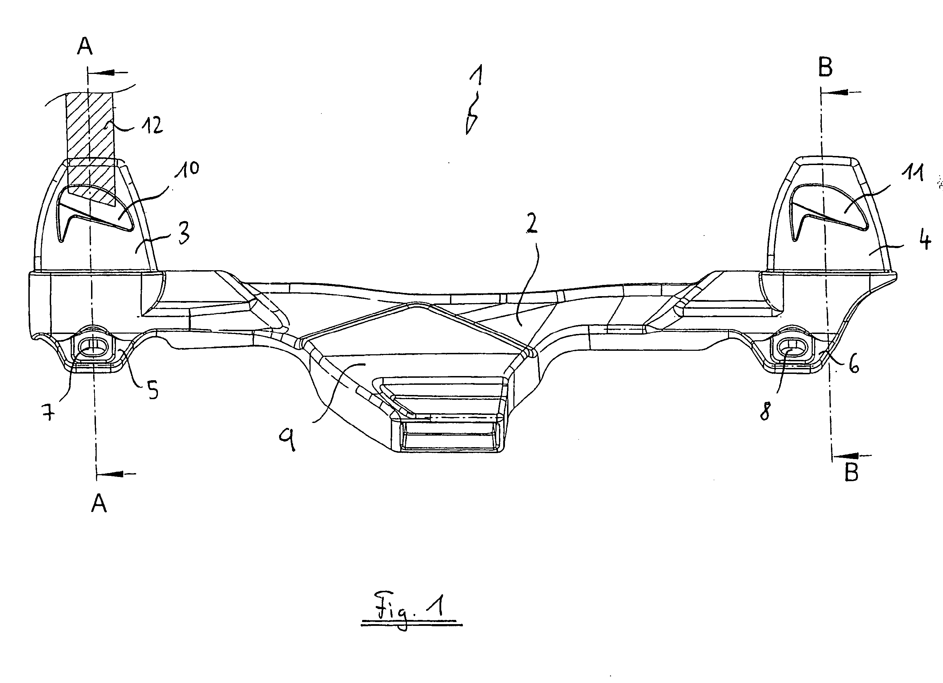

Figur 1 zeigt eine Halteeinrichtung 1, die einen Mittel- bzw. Verbindungsabschnitt 2 aufweist, an dessen erstem Ende ein erstes Formschlusselement 3 und an dessen zweitem Ende ein zweites Formschlusselement 4 angeordnet ist. Die Halteeinrichtung 1 kann einstückig aus Kunststoff hergestellt sein. Im Bereich der Formschlusselemente 3, 4 ist jeweils ein Flansch 5, 6 mit einem zugeordneten Loch 7, 8 vorgesehen. Über die Flansche 5, 6 und weitere an der Rückseite der Halteeinrichtung 1 vorgesehene Flansche kann die Halteeinrichtung am Rahmen eines hier nicht näher dargestellten Motorrad befestigt werden, z.B. mittels Schrauben. Ein Bereich 9 des Mittel- bzw. Verbindungsabschnitts 2 kann hinsichtlich seines Designs als sichtbarer, d.h. nicht durch die Verkleidung des Motorrads abgedeckter Abschnitt ausgebildet sein.

Wie aus Figur 1 ersichtlich ist, sind die Formschlusselemente 3, 4 in der hier dargestellten Seitenansicht "zahnartig" gestaltet, vergleichbar der Außenkontur eines Zahnradzahns. Die Formschlusselemente 3, 4 verjüngen sich also in Richtung zu ihrem freien, vom Motorrad abstehenden Ende hin. Ein Seitenkoffer, der entsprechend der Form der Formschlusselemente 3, 4 gestaltete Ausnehmungen aufweist, kann daher sehr leicht an den Formschlusselementen 3, 4 eingehängt werden, ohne dass die Gefahr eines Verhakens bzw. Verkantens des Seitenkoffers besteht. Da die Formschlusselemente 3, 4 sich zu ihrem freien Ende hin verjüngen, gleitet der Seitenkoffer beim Aufsetzen auf die Formschlusselemente 3, 4 automatisch in seine korrekte Position. Weiter erleichtert wird das Aufsetzen Seitenkoffers dadurch, dass die "Kanten" der Formschlusselemente gerundet sind, was auch aus Sicherheitsgründen von Vorteil ist.

Wie aus Figur 1 ersichtlich ist, weisen die Formschlusselemente 3, 4 jeweils ein Durchgangsloch 10, 11 auf, dessen Kontur ebenfalls gerundet ist. Durch die Löcher 10, 11 wird einerseits ein niedriges Bauteilgewicht erreicht. Ein weiterer Vorteil besteht darin, das die Löcher 10, 11 bei abgenommenem Seitenkoffer als Verzurrösen für die Verzurrung von Gepäck verwendet werden können. Dies ist in Figur 1 angedeutet, wo durch das Loch 10 des Formschlusselements 3 ein Verzurrband 12 gefädelt ist. Alternativ dazu kann selbstverständlich ein Expander oder ein anderes mit einem Haken versehenes Verzurrelement in die Löcher 10, 11 der Formschlusselemente 3, 4 eingehängt werden.

Figur 2 zeigt einen Querschnitt durch die Halteeinrichtung 1 der Figur 1 entlang der Schnittlinie A-A. Die Halteeinrichtung ist im Bereich des Formschlusselements A an zwei Flanschabschnitten 5, 5a bzw. an den daran vorgesehenen Löchern 7, 7a an einem hier nicht näher dargestellten Motorradrahmen festgeschraubt. Der Mittel- bzw. Verbindungsabschnitt 2 (vgl. Figur 1) der Halteeinrichtung 1 ist durch ein Verkleidungselement 13 abgedeckt. Im Bereich der Formschlusselemente 3, 4 weist das Verkleidungselement 13 eine Ausnehmung 14 auf, durch die das Formschlusselement 3 schräg nach oben heraussteht. Eine entsprechende Ausnehmung kann für das andere, hier nicht zu erkennende Formschlusselement vorgesehen sein. Wenn, wie in Figur 2 dargestellt, kein Seitenkoffer montiert ist, kann das Formschlusselement als Verzurröse verwendet werden. Hierzu kann ein Spannband 12 durch das Loch 10 gefädelt werden bzw. ein Expander o.ä. kann in das Loch 10 des Formschlusselements eingehängt werden. Wenn auf der rechten und auf der linken Seite des Motorrads jeweils eine derartige Halteeinrichtung angeordnet ist, kann das Gepäck mit entsprechenden Spanneinrichtungen sicher an den Formschlusselementen 3, 4 verzurrt werden.

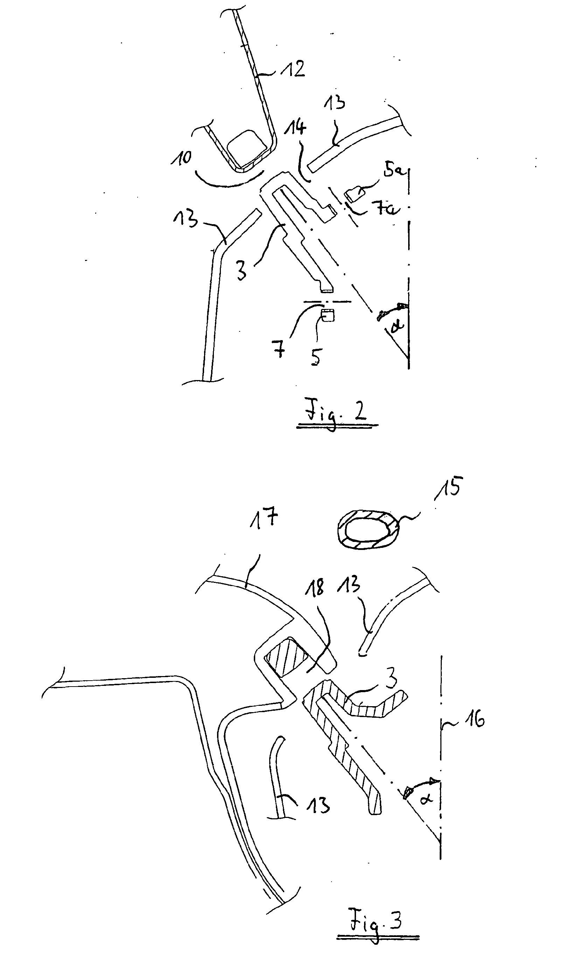

Figur 3 zeigt einen Querschnitt durch die Halteeinrichtung 1 der Figur 1 entlang der Schnittlinie B-B. Oberhalb des Formschlusselements 3 ist ein Haltegriff 15 vorgesehen, der sich im wesentlichen in Längsrichtung des Motorrads, d. h. senkrecht zur Zeichenebene erstreckt. Der Haltegriff 15 ist für den Sozius vorgesehen. Da das Formschlusselement 3 schräg unter einem Winkel α im Bezug auf eine Hochachse 16 des Motorrads angeordnet ist, kann der Seitenkoffer 17 mühelos von schräg oben an dem Formschlusselement 3 eingehängt und auch mühelos wieder nach schräg oben abgenommen werden. Der Seitenkoffer 17 weist hierzu eine Ausnehmung 18 auf, die komplementär im Bezug auf das Formschlusselement 3 gestaltet ist. Da, wie im Zusammenhang mit Figur 1 erläutert, die Formschlusselemente 3, 4 zu ihrem freien Ende hin sich verjüngen, gleitet beim Einhängen des Seitenkoffers 17 die Ausnehmung 18 ohne Verkanten auf das Formschlusselement 3 auf, wodurch eine ordnungsgemäße Positionierung des Seitenkoffers 17 sichergestellt ist.

## Patentansprüche

1. Motorrad mit einer im Heckbereich des Motorrads angeordneten Halteeinrichtung (1), die zum Halten eines seitlich am Motorrad angebrachten Seitenkoffer (17) vorgesehen ist, und mit einem solchen Seitenkoffer, wobei die Halteeinrichtung (1) mindestens ein Formschlusselement (3, 4) aufweist, das nach oben vom Motorrad absteht und wobei der Seitenkoffer (17) eine Ausnehmung (18) aufweist, die formschlüssig auf das Formschlusselement (3, 4) aufsetzbar ist, **dadurch gekennzeichnet, dass**
das Formschlusselement (3, 4) zahn- bzw. zapfenartig ausgebildet ist und ein Loch (10, 11) aufweist, das bei abgenommenem Seitenkoffer (17) als Verzurröse fungiert.

2. Motorrad nach Anspruch 1, wobei das mindestens eine Formschlusselement (3, 4), in einer Vorder- bzw. Rückansicht des Motorrads gesehen, schräg nach oben vom Motorrad absteht.

3. Motorrad nach einem der Ansprüche 1 oder 2, wobei das mindestens eine Formschlusselement (3, 4), in einer Vorder- bzw. Rückansicht des Motorrads gesehen, unter einem gegenüber einer Hochachse (16) des Motorrads gemessenen Winkel (α), der in einem Winkelbereich zwischen 20° und 45° liegt, schräg nach oben vom Motorrad absteht

4. Motorrad nach Anspruch 3, wobei der Winkel (α) 30° beträgt.

5. Motorrad nach einem der Ansprüche 1 bis 4, wobei die Halteeinrichtung (1) zwei solche zahn- bzw. zapfenartige Formschlusselemente (3, 4) aufweist.

6. Motorrad nach Anspruch 5, wobei die beiden zahn- bzw. zapfenartigen Formschlusselemente (3, 4) durch einen sich im wesentlichen in Längsrichtung des Motorrads erstreckenden Verbindungsabschnitt (2) einstückig miteinander verbunden sind.

7. Motorrad nach einem der Ansprüche 1 bis 6, wobei zumindest ein Teil der Halteeinrichtung (1) durch eine Verkleidung (13) des Motorrads abgedeckt ist.

8. Motorrad nach Anspruch 7, wobei die Verkleidung (13) eine Ausnehmung (14) aufweist, aus der das mindestens eine Formschlusselement (3, 4) heraussteht.

9. Motorrad nach einem der Ansprüche 6 bis 8, wobei die Halteeinrichtung (1) unter einer Verkleidung (13) angeordnet ist und die Verkleidung (13) Ausnehmungen (14) aufweist, aus denen die Formschlusselemente (3, 4) herausstehen.

10. Motorrad nach einem der Ansprüche 1 bis 9, wobei das mindestens eine Formschlusselement (3, 4) die Form einer Platte hat.

11. Motorrad nach einem der Ansprüche 1 bis 10, wobei sich das mindestens eine zahn- bzw. zapfenartige Formschlusselement (3, 4) zu seinem vom Motorrad abstehenden Ende hin verjüngt.

12. Motorrad nach einem der Ansprüche 1 bis 11, wobei das mindestens eine Formschlusselement (3, 4) in einer Seitenansicht des Motorrads eine zahnradzahnähnliche Form hat.

13. Motorrad nach einem der Ansprüche 1 bis 12, wobei die Halteeinrichtung (1) aus Kunststoff ist.

14. Motorrad nach einem der Ansprüche 1 bis 13, wobei die Halteeinrichtung (1) mit einem Rahmen des Motorrads verschraubt ist.

## Claims

1. A motorcycle with a retaining device (1) at the rear for holding a trunk (17) attached to the side of the motorcycle, and also comprising a said trunk, wherein the retaining device (1) comprises at least one positive closure element (3, 4) which projects upwards from the motorcycle and wherein the side trunk (17) has a recess (18) for positively placing on the positive closure element (3, 4), **characterised in that** the positive closure element (3, 4) is toothed or pin-like and has a hole (10, 11) for use as a clamping or lashing lug when the side trunk (17) is removed.

2. A motorcycle according to claim 1, wherein the at least one positive closure element (3, 4) projects at an angle upwards from the motorcycle, seen in front or rear view thereof.

3. A motorcycle according to claim 1 or claim 2, wherein the at least one positive closure element (3, 4) considered in front or rear view of the motorcycle, projects upwards from the motorcycle at an angle (α) in the range between 20° and 45° relative to a vertical axis (16) of the motorcycle.

4. A motorcycle according to claim 3, wherein the angle (α) is 30°.

5. A motorcycle according to any of claims 1 to 4, wherein the retaining device (1) has two toothed or pin-like positive closure elements (3, 4).

6. A motorcycle according to claim 5, wherein the two toothed or pin-like positive closure elements (3, 4) are in one piece and connected together by a connecting portion (2) extending substantially in the longitudinal direction of the motorcycle.

7. A motorcycle according to any of claims 1 to 6, wherein at least a part of the retaining device (1) is covered by the fairing (13) of the motorcycle.

8. A motorcycle according to claim 7, wherein the fairing (13) has a recess (14) from which the at least one positive closure element (3, 4) projects.

9. A motorcycle according to any of claims 6 to 8, wherein the retaining device (1) is disposed under a fairing (13) and the fairing (13) has recesses (14) out of which the positive closure elements (3, 4) project.

10. A motorcycle according to any of claims 1 to 9, wherein the at least one positive closure element (3, 4) is plate-shaped.

11. A motorcycle according to any of claims 1 to 10, wherein the at least one toothed or pin-like positive closure element (3, 4) tapers towards its end projecting from the motorcycle.

12. A motorcycle according to any of claims 1 to 11, wherein the at least one positive closure element (3, 4) has a shape like a tooth of a gearwheel, in side view of the motorcycle.

13. A motorcycle according to any of claims 1 to 12, wherein the retaining device (1) is plastics material.

14. A motorcycle according to any of claims 1 to 13, wherein the retaining device (1) is screwed to a frame of the motorcycle.

## Revendications

1. Motocyclette équipé d'un dispositif de fixation (1) dans la zone arrière de la motocyclette pour la fixation d'une sacoche latérale (17) installée latéralement à la motocyclette et avec une telle sacoche latérale, le dispositif de fixation (1) ayant au moins un élément de liaison par la forme (3, 4) en saillie vers le haut à partir de la motocyclette et, la sacoche latérale (17) ayant un évidement (18) emmanché en liaison par la forme sur l'élément de liaison par la forme (3, 4),
**caractérisée en ce que**
l'élément de liaison par la forme (3, 4) est en forme de dent ou de téton et présente un orifice (10, 11) servant d'oeillet de sanglage lorsque la sacoche latérale (17) est enlevée.

2. Motocyclette selon la revendication 1,
dans laquelle
au moins un élément de liaison par la forme (3, 4) vient en saillie, obliquement vers le haut en vue de face ou d'arrière de la motocyclette.

3. Motocyclette selon l'une quelconque des revendications 1 ou 2,
dans laquelle
au moins un élément de liaison par la forme (3, 4), en vue de face ou d'arrière de la motocyclette vient en saillie à partir de la motocyclette selon un angle (α) mesuré à partir de l'axe vertical de la motocyclette (16) se trouvant dans une plage d'angle entre 20° et 45°.

4. Motocyclette selon la revendication 3,
dans laquelle
l'angle (α) est de 30°.

5. Motocyclette selon l'une quelconque des revendications 1 à 4,
dans laquelle
le dispositif de fixation (1) présente un tel élément de liaison par la forme (3, 4) en forme de dent ou de téton.

6. Motocyclette selon la revendication 5,
dans laquelle
les deux éléments de liaison par la forme (3, 4) en forme de dents ou de tétons sont reliés en une seule pièce par un segment de liaison (2) s'étendant essentiellement selon l'axe longitudinal de la motocyclette.

7. Motocyclette selon l'une quelconque des revendications 1 à 6,
dans laquelle
au moins une partie du dispositif de fixation est recouverte par le carénage (13) de la motocyclette.

8. Motocyclette selon la revendication 7,
dans laquelle
le carénage (13) présente une déocupe (14) laissant en saillie au moins un élément de liaison par la forme (3, 4).

9. Motocyclette selon l'une quelconque des revendications 6 à 8,
dans laquelle
le dispositif de fixation (1) est disposé sous un carénage (13) qui présente des découpes (14) laissant en saillie les éléments de liaison par la forme (3, 4).

10. Motocyclette selon l'une quelconque des revendications 1 à 9,
dans laquelle
au moins un élément de liaison (3, 4) a la forme d'une plaque.

11. Motocyclette selon l'une quelconque des revendications 1 à 10,
dans laquelle
au moins un élément de liaison (3, 4) en forme de dent ou de téton se rétrécit à son extrémité opposée à la motocyclette.

12. Motocyclette selon l'une quelconque des revendications 1 à 11,
dans laquelle
au moins un élément de liaison par la forme (3, 4) a une forme semblable à une dent de roue dentée en vue de côté de la motocyclette.

13. Motocyclette selon l'une quelconque des revendications 1 à 12,
dans laquelle
le dispositif de fixation est en matière plastique.

14. Motocyclette selon l'une quelconque des revendications 1 à 13,
dans laquelle,
le dispositif de fixation (1) est vissé au cadre de la motocyclette.
